# EUROPÄISCHE PATENTANMELDUNG

(11) **EP 0 700 641 A2**
(43) Veröffentlichungstag der Anmeldung: **13.03.1996**
(21) Anmeldenummer: 95112582.2
(22) Anmeldetag: 10.08.1995
(51) Int. Cl.: A23J 1/14, A23J 3/34

(54) **Verfahren zur Erzeugung eines lebensmittelfähigen Proteins**

(30) Priorität: 23.08.1994 DE 4429787
(71) Anmelder: Braunschweigische Maschinenbauanstalt AG, D-38122 Braunschweig (DE)
(72) Erfinder: Klein, Christian, Dr., D-38300 Wolfenbüttel (DE); Tegtmeier, Uwe, Dr., D-31234 Edemissen-Rietze (DE)
(74) Vertreter: Gramm, Werner, Prof. Dipl.-Ing.

(57) **Zusammenfassung**

Die Erfindung betrifft ein Verfahren zur Erzeugung eines lebensmittelfähigen, weitgehend wasserlöslichen Proteins aus pflanzlichen Proteinen durch saure alkoholische Extraktion zur teilweisen Entfernung von nicht proteinhaltigen Komponenten und anschließender mechanischen Zerkleinerung der Proteinpartikel. Zur Erzeugung eines lebensmittelfähigen und geschmacksneutralen Proteins wird erfindungsgemäß insbesondere vorgeschlagen, daß die Extraktion mit einer alkoholischen Lösung unter Zusatz von Essigsäure, anschließend eine mechanische Zerkleinerung der Proteinpartikel bei Temperaturen unter 55° C und pH-Werten im Bereich 6,5 bis 7,5 eine Zugabe von Endo- und/oder Exopeptidasen und schließlich eine enzymatische Proteolyse bei pH-Werten < 9,5 durchgeführt werden.

## Beschreibung

Die Erfindung betrifft ein Verfahren zur Erzeugung eines lebensmittelfähigen, weitgehend wasserlöslichen Proteins aus pflanzlichen Proteinen durch saure alkoholische Extraktion zur teilweisen Entfernung von nicht proteinhaltigen Komponenten und anschließender mechanischen Zerkleinerung der Proteinpartikel.

Aus der DE 28 14 922 A1 ist ein Verfahren zur Reinigung und V erbesserung der organoleptischen Qualität von Kartoffelprotein-Koagulat zum Zweck des Einsatzes in der Lebensmittelindustrie bekannt. Nach diesem Verfahren werden aus frisch gefälltem Kartoffelprotein-Koagulat unerwünschte Begleitstoffe wie Lipide, Geruchs- und Geschmacksstoffe mit polaren Lösungsmitteln (Wasser, Äthanol, Methanol u.a.) extrahiert. Der Vorteil des Verfahrens besteht darin, daß ein geschmacksneutrales Kartoffelprotein-Koagulat entsteht. Nachteilig ist jedoch aufgrund der noch vorhandenen Denaturierung, daß eine für die Anwendung in der Lebensmittelindustrie notwendige Löslichkeit und damit verbunden die Ausprägung bestimmter funktioneller Eigenschaften nicht vorhanden sind.

Es ist ferner ein Verfahren bekannt geworden, das hitzekoaguliertes Kartoffelprotein durch enzymatische Hydrolyse löslich macht (Enzymatische Hydrolyse von hitzekoaguliertem Kartoffelprotein: 1. Mitteilung, Berghofer, E. et al. (1980): Literaturübersicht, Starch/Stärke 32, Nr. 7, S. 231 bis 238; 2. Mitteilung, Mittelbach, F. et al. (1980): Einflußparameter, Starch/Stärke 32, Nr. 11, S. 369 bis 375; 3. Mitteilung, Berghofer, E. et al. (1981): Modell für den enzymatischen Abbau von nicht vorbehandeltem, koaguliertem Kartoffelprotein mit mikrobieller Protease, Starch/Stärke 33, Nr. 1, S. 18 bis 21). Das beschriebene Verfahren benötigt zum Erreichen einer Proteinlöslichkeit von etwa 70 % eine Enzymeinwirkzeit von mindestens zwei und höchstens dreizehn Stunden. Der hierbei erreichte Hydrolysegrad führt dazu, daß zwar in befriedigendem Maß eine Löslichkeit des Proteins hergestellt wird, dafür aber andere funktionelle Eigenschaften wie Schaumexpansion, Schaumstabilität, Emulsionskapazität nicht befriedigen oder nicht vorhanden sind. Darüber hinaus ist es bei diesem Verfahren zur Verbesserung von Geschmack und Farbe des erzeugten Proteins notwendig, eine Nachbehandlung durchzuführen.

Weiterhin ist ein Verfahren gemäß DE 41 33 538 C2 bekannt geworden, nach dem durch Einsatz großer Alkalimengen bei einem pH-Wert ≧ 12,5 unter Hochdruck bei Zimmertemperatur homogenisiert wird, um ein lösliches und lebensmittelfähiges Protein zu erhalten. Dem Fachmann ist allerdings bekannt, daß der Einsatz hoher Alkalimengen verfahrenstechnisch ungünstig und unwirtschaftlich ist. Darüber hinaus trägt die Hochdruckhomogenisation unter den gewählten Bedinungen innerhalb eines wirtschaftlichen Behandlungszeitraumes nur mäßig zur Zerkleinerung der Proteinpartikel bei, so daß die Löslichkeit des erzeugten Proteins ebenfalls nur sehr mäßig ausfällt. Ein solches Protein zeigt nach der gemäß der Patentschrift durchgeführten Sprühtrocknung eine starke Sedimentationsneigung in wässriger Lösung, verbunden mit dem Mangel an weiteren funktionellen Eigenschaften wie Schaumexpansion und Emulsionskapazität.

Nachteilig bei dem vorbekannten Verfahren ist das Fehlen der Löslichkeit und weiterer funktioneller Eigenschaften des geschmacksneutralen Kartoffelprotein-Koagulats, so daß quasi kein Einsatz für die Lebensmittelindustrie gegeben ist, bzw. durch den Einsatz von Enzymen aus nicht vorbehandeltem Kartoffelprotein-Koagulat zwar ein Eiweißhydrolysat mit befriedigender Löslichkeit erzeugt wird, jedoch durch den hohen enzymatischen Hydrolysegrad andere funktionelle Eigenschaften unbefriedigend oder gar nicht vorhanden sind. Neben dem Vorhandensein unerwünschter Geschmacks-, Geruchs- und Bitterstoffe ist ein solches Protein ebenfalls für die Lebensmittelindustrie großtechnisch nicht einsetzbar.

Eine zufriedenstellende Löslichkeit und andere zufriedenstellende funktionelle Eigenschaften werden auch durch die Anwendung einer alkalischen Hochdruckhomogenisation nicht erreicht, da der starke Denaturierungsgrad des Ausgangsmaterials Kartoffelprotein-Koagulat nur sehr mäßig in Richtung einer Renaturierung verschoben wird. Die hohen benötigten Alkalimengen gehen zu Lasten der Wirtschaftlichkeit des Verfahrens.

Allen vorbekannten Verfahren ist gemeinsam, daß die Denaturierung des hitzekoagulierten Ausgangsmaterials nicht in befriedigender Weise aufgehoben und kein Protein erzeugt werden kann, das dem ursprünglichen nativen Ausgangszustand mit seinen ausgeprägten typischen funktionellen Eigenschaften nahekommt.

Der Erfindung liegt die Aufgabe zugrunde, das eingangs beschriebene Verfahren derart auszubilden, daß ein lebensmittelfähiges und geschmacksneutrales Protein erzeugt werden kann.

Diese Aufgabe wird gemäß der Erfindung durch folgende Verfahrensschritte gelöst:
a) die saure alkoholische Extraktion des pflanzlichen Proteins wird mit einer alkoholischen Lösung mit einer Konzentration von < 50 Gew% Ethanol unter Zusatz einer organischen Säure, vorzugsweise Essigsäure durchgeführt;
b) die mechanische Zerkleinerung der Proteinpartikel erfolgt in wässriger Suspension bei Trockensubstanzgehalten von > 15 % und einer Temperatur zwischen 30° C und 55° C bis zu einer mittleren Größenpartikelverteilung von 1 bis 14 µm;
c) im Anschluß an die saure alkoholische Extraktion und nach einer Neutralisation des proteinhaltigen Gemisches mit Alkali wird die mechanische Zerkleinerung bei pH-Werten im Bereich 6,5 - 7,5 in Anwesenheit von Alkohol durchgeführt;
d) es erfolgt dann eine weitere Verringerung der Partikelgrößenverteilung durch Zugabe von Endo- und/oder Exopeptidasen;
e) durch Begrenzung der Einwirkzeit der Endo- und/oder Exopeptidasen in einer Konzentration von bis zu 10 ml Enzymlösung pro kg Proteintrockensubstanz auf weniger als 1 Stunde wird die Bildung hydrophober Peptide mit niedriger molarer Masse, vorzugsweise < 8.000 g/mol unterbunden;
f) es wird eine enzymatische Proteolyse bei pH-Werten < 9,5 durchgeführt;
g) das gelöste Protein wird durch Fällung am isoelektrischen Punkt isoliert.

Erfindungsgemäß wird somit zur wirkungsvollen Extraktion von niedermolekularen, nicht proteinhaltigen Komponenten des Proteinkoagulats ein organisches, polares Lösungsmittel unter Zusatz einer organischen Säure von z. B. Essig- oder Zitronensäure verwendet. Hierdurch wird der überwiegende Anteil der Nicht-Proteinstoffe wie Lipide, Glycoalkaloide und Asche entfernt. Durch das erfindungsgemäße Einbringen von Scherkräften in die Proteinlösung werden die einzelnen Proteinpartikel derart zerkleinert, daß die mittlere Partikelgrößenverteilung von z. B. ca. 50 µm des Ausgangsmaterials nach der Behandlung zwischen 1 und 14 µm liegt. Hierbei entspricht eine mittlere Partikelverteilung von 14 µm einer Partikelgrößenverteilung von 50 % < 14 µm, wobei vorzugsweise 90 % der Partikel eine Größe von < 20 µm aufweisen sollten. Hierdurch kann ein enzymatischer Angriff der Proteinpartikel sehr viel effizienter erfolgen als bei den vergleichsweise erheblich größeren Ausgangspartikeln im Stand der Technik. Zugleich ergibt sich der Vorteil, daß die enzymatische Behandlung vergleichsweise kurz sein kann, wobei dennoch genügend feine Partikel gebildet werden, die im Vergleich zu den Verhältnissen nach der mechanischen Zerkleinerung noch einmal um den Faktor 10 kleiner sind. Hierdurch wird eine hohe Löslichkeit erzielt.

Auf diese Weise ergibt sich als weiterer Vorteil, daß die restlichen, zuvor noch in den Proteinpartikeln eingeschlossenen niedermolekularen Komponenten mit der Extraktphase der Gegenstromwäsche im weiteren Prozeßverlauf ausgetragen werden und ein geschmacks- und geruchsneutrales Protein resultiert. Ein ähnlich guter Extraktionsverlauf wird sonst nur mit der verfahrenstechnisch und wirtschaftlich aufwendigeren alkoholischen Druckkochung gemäß der DE 28 14 922 A1 erzielt. Ferner ist durch die Verfahrensführung ermöglicht, während der mechanischen Zerkleinerung eine Restalkoholkonzentration von ca. 1 bis 2 vol-% einzustellen. Der Alkohol wirkt sich auf die Schaumbildung dämpfend aus, und ferner erfolgt eine vollständigere Extraktion der Nicht-Proteinstoffe.

Das Einbringen von Scherkräften kann erfindungsgemäß mittels Ultraschall, einer Kolloidmühle, einer Mikrokavitationsaufschlußmaschine oder mittels Hochdruck erfolgen. Durch erfindungsgemäße Anwendung eines pH-Wertes ≦ 7,5 und mäßigen Temperaturen bis 55° C während der Partikelzerkleinerung wird die Entstehung von Alkalischäden an den Proteinen vermieden. Die bei der Partikelzerkleinerung durch Energiedissipation in die Suspension eingetragene Wärmemenge braucht der Lösung nicht entzogen zu werden, sondern kann vorteilhaft genutzt werden, um das Temperaturoptimum für die anschließende Enzymbehandlung je nach Ausführungsform zwischen 45 und 60° C einzustellen.

Durch die Anwendung von mäßigen pH-Werten während des gesamten Prozeßablaufes im Vergleich zu anderen bekannt gewordenen Verfahren (siehe hierzu DE 41 33 538 C2) bleibt die Salzfracht aufgrund der durch die geringen pH-Wert-Veränderungen eingesparten Säure- und Laugenmengen in dem erfindungsgemäßen Verfahren niedrig. Somit ist das während der Gegenstromauswaschungen entstehende Abwasser, das nach Abtrennung von flüchtigen Komponenten in einer Destillationskolonne anschließend in einer Eindampfung aufkonzentriert wird, nur niedrig mit Salz belastet. Die in dem Konzentrat enthaltenen Lipide und Glycoalkaloide können somit einer sinnvollen Weiterverwendung zugeführt werden. Das bei der Eindampfung anfallende Kondensat ist nur niedrig belastet. Aus dem Prozeß entstehen keine weiteren Abwasserströme.

Überraschenderweise hat sich herausgestellt, daß durch die Enzymbehandlung eine ausgezeichnete Löslichkeit und weitere funktionelle Eigenschaften erzeugt werden, die sich vorteilhaft für bestimmte Applikationen in der Lebensmittel- und auch in der Futtermittelindustrie eignen bzw. hierzu Voraussetzung sind. Die Löslichkeit (gemessen als PDI: Protein Dispersibility Index nach A.O. C.S. Official Method Ba 10 bis 65) erreicht einen Wert von > 90 %. Die Gelierungseigenschaften, die Emulsionskapazität, die Schaumexpansion und die Schaumstabilität (gemessen nach "Lawhon, J.T. und Cater, C.M. (1971): Effect of processing method and pH of precipitation on the yields and functional properties of protein isolates from glandless cotton-seed, Journal of Food Science, 36, p 372" und "Holm, F. and Ericson, S. (1980): Emulsifying properties of undenaturated potato protein concentrate, Journal of food Technology, 15, p 71 bis 83") zeigen im Vergleich zu Lebensmittelproteinen anderer Herkunft gute bis sehr gute Resultate.

Im Vergleich zu anderen Verfahren, die nicht die oben erwähnte mittlere Partikelgrößenverteilung erzeugen, werden trotz enzymatischer Behandlung nicht die gewünschten funktionellen Eigenschaften erreicht. Im Vergleich zu dem erfindungsgemäßen Verfahren muß bei Partikeln mit einer mittleren Partikelverteilung > 12 µm eine entsprechend längere Enzymhydrolyse stattfinden, die bewirkt, daß zwar eine befriedigende Löslichkeit erreicht wird, aber andere funktionelle Eigenschaften unbefriedigend oder gar nicht vorhanden sind, und darüber hinaus durch die längere Enzymeinwirkzeit die dem Fachmann bekannten hydrophoben Bitterpeptide erzeugt werden.

Erfindungsgemäß ist es vorteilhaft, wenn die Enzymbehandlung weniger als 60 Minuten beträgt und als Enzyme bakterielle Proteasen oder Pilzproteasen mit Endo- und/oder Exoaktivität oder Mischungen dieser Enzyme verwendet werden. Ein weiterer Vorteil des Verfahrens ergibt sich durch die Kombination des mechanischen Feinstzerkleinerns und der nachfolgenden enzymatischen Hydrolyse des Protein-Koagulats. Damit verbunden ist die weitere Freisetzung nicht proteinhaltiger Komponenten, die nach der Proteinfällung am isoelektrischen Punkt auf einfachste Weise während der anschließenden Gegenstromauswäsche mit nacheinander geschalteten Dekantern und Separatoren abgetrennt werden können.

### 1. Beispiel für ein Verfahren gemäß der Erfindung:

Aus einem vollständig denaturierten Kartoffelprotein wird ein Protein erzeugt, das eine hohe Löslichkeit aufweist und für die Anwendung in Lebensmitteln geeignet ist. Hierzu werden 1000 kg Kartoffelprotein zunächst einer wässrigen alkoholischen Extraktion bei 60° C unterzogen, wobei die essigsaure Alkohollösung eine Konzentration von 0,5 % mas Essigsäure (bezogen auf die Trockensubstanz des Proteins) und 50 % mas Alkoholanteil aufweist. Der Gesamttrockensubstanzgehalt der resultierenden Suspension beträgt 14 % mas. Die Extraktion wird als 3stufige Gegenstromextraktion durchgeführt, wobei das Extrakt-/Raffinat-Phasenverhältnis derart eingestellt wird, daß eine Alkoholkonzentration von ca. 27 % mas in der Raffinatphase der letzten Dekanterstufe resultiert. Die Fest-Flüssig-Trennung der Phasen wird jeweils mittels Dekanter vorgenommen.

Im Anschluß an die saure alkoholische Extraktion wird der pH-Wert in der Suspension auf 9,5 bei einer Temperatur von 60° C und Zugabe von 64 kg H₂O₂-Lösung mit einem Anteil von 35 % mas H₂O₂ durchgeführt. Die Reaktionszeit beträgt 45 Minuten. Der pH-Wert erniedrigt sich im Verlauf auf ca. 7,5. Die suspendierten Feststoffe werden anschließend mittels eines Dekanters abgetrennt und 2fach mit insgesamt ca. 7,5 m³ Wasser gewaschen, wobei wiederum die Fest-Flüssig-Trennung der Phasen mittels Dekanter vorgenommen wird.

Die anschließende mechanische Naßzerkleinerung der Proteinpartikel wird mit einer Kolloidmühle vorgenommen, wobei eine mittlere Partikelgrößenverteilung von ca. 7,5 µm nach der Behandlung erreicht wird. Die Trockensubstanzkonzentration der wässrigen Suspension wird bei der Vermahlung auf 18 % mas eingestellt.

Im Anschluß an die mechanische Zerkleinerung wird eine enzymatische Hydrolyse des gereinigten und zerkleinerten Proteinkoagulats unter Zugabe entsprechender Enzyme erreicht. Hierzu wird zunächst die Trockensubstanzkonzentration der Suspension auf 10 % mas mittels Zugabe von Wasser eingestellt. Anschließend wird ein Enzymgemisch aus einer bakteriellen Endoprotease und einer Pilzprotease mit Exo-Aktivität in einer Menge von 1 % mas der Endoprotease und 0,5 % mas der Pilzprotease bezogen auf Proteinkoagulat-Trockensubstanz zugegeben. Hierbei betragen die Enzymaktivitäten 0,5 bzw. 2,0 AU/ml Enzymlösung. Bei der enzymatischen Behandlung über 0,5 Stunden beträgt die Temperatur der Suspension 47° C bei einem pH-Wert von 6,5. Hierdurch wird eine nahezu vollständige Löslichkeit von ca. 95 % des Proteins erreicht.

Das gelöste Protein wird anschließend am isoelektrischen Punkt bei einem pH-Wert von ca. 4,6 durch Zugabe von ca. 9 kg Schwefelsäure (97 % mas) in die Raffinatlösung erreicht. Noch gelöste Begleitstoffe werden wiederum in einer nachgeschalteten 2stufigen Waschstufe mit insgesamt ca. 7 m³ Frischwasser ausgewaschen und abgetrennt. In diesen Waschstufen werden jeweils erste Phasentrennungen mit Dekantern durchgeführt und die jeweils erhaltenen Waschwasserphasen der Dekanter anschließend in einem Separator abermals in Waschwasserphase und Phase des proteinhaltigen Materials getrennt. Letztere wird auf einen pH-Wert von ca. 7 eingestellt und anschließend in einem Sprühtrockner schonend getrocknet.

Als Endprodukt werden ca. 890 kg eines getrockneten, löslichen Kartoffelproteins erhalten, das einen Restwasseranteil von ca. 5 % mas aufweist und ca. 92 % Löslichkeit, 100 % Schaumexpansionsvermögen, sowie 400 % mas Emulsionskapazität besitzt.

### 2. Beispiel für ein Verfahren gemäß der Erfindung:

Aus einem vollständig denaturierten Kartoffelprotein wird ein Protein hergestellt, das ein hohes Schaumexpansionsvermögen aufweist und ebenfalls für eine Anwendung in Lebensmitteln geeignet ist.

Hierzu wird - wie bereits zuvor beschrieben - das Kartoffelprotein zunächst einer sauren alkoholischen Extraktion unterworfen, anschließend mit H₂O₂ behandelt und ausgewaschen, wobei die zuvor genannten Bedingungen eingehalten werden. Die anschießende mechanische Naßzerkleinerung der Proteinpartikel wird derart vorgenommen, daß eine mittlere Partikelgrößenverteilung von ca. 10 µm realisiert wird. Die enzymatische Hydrolyse des zuvor zerkleinerten Proteinkoagulats wird mittels einer bakteriellen Endoprotease vorgenommen, die ein pH-Optimum im Bereich von 6,2 und ein Temperaturoptimum im Bereich von 55° C bis 60° C besitzt. Diese bakterielle Endoprotease wird in einer Konzentration von 0,2 % mas, bezogen auf Proteintrockensubstanz, angewendet, wobei die Enzymlösung eine Aktivität von 0,5 AU/ml aufweist. Die Einwirkzeit des Enzyms beträgt 10 bis 15 Minuten.

Die Fällung und Abtrennung des Proteins sowie die anschließende Gegenstromauswaschung und abschließende Sprühtrocknung werden ebenfalls unter Einhaltung der zuvor genannten Bedingungen durchgeführt. Es resultiert eine Menge von ca. 880 kg eiweißlöslichen Kartoffelproteins mit ca. 900 % Schaumexpansionsfähigkeit, ca. 45 % Eiweißlöslichkeit und ca. 400 % mas Emulsionsfähigkeit bei einem Restwassergehalt von 5,5 % mas.

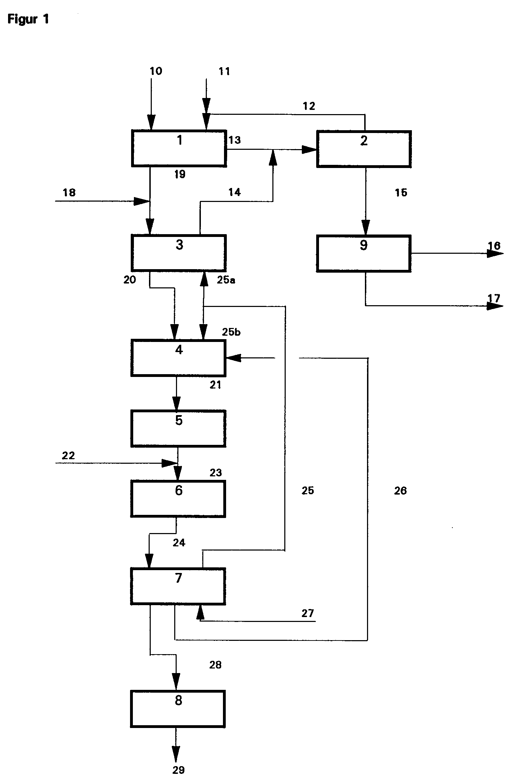

In der Zeichnung ist ein als Beispiel dienender Verfahrensablauf gemäß der Erfindung schematisch dargestellt.

Gemäß dieser Darstellung wird durch alkoholische Extraktion (Stufe 1) pflanzliches Kartoffelprotein-Koagulat mit einer essigsauren Alkohol-/Wassermischung (Stoffstrom 11 und 12) mehrstufig gegenstromextrahiert. In einer Alkoholdestillationskolonne (Stufe 2) wird eine Extraktphase (Stoffstrom 13) aufbereitet. Der Destillationsrückstand (Stoffstrom 15) der Alkoholdestillation wird in einer Eindampfung (Stufe 9) zu einem glycoalkaloid- und lipidhaltigen Konzentrat (Stoffstrom 17) eingedampft. Des weiteren entsteht während der Eindampfung Kondensat (Stoffstrom 16). Eine Raffinatphase (Stoffstrom 19) wird mit Alkali (Stoffstrom 18) von einer Gegenstromauswaschung (Stufe 3) auf einen bestimmten pH-Wert eingestellt. Das resultierende Waschwasser (Stoffstrom 14) wird der Alkoholdestillation (Stufe 2) zugeführt. Der erhaltene Unterlauf (Stoffstrom 20) mit den gewaschenen Proteinpartikeln wird nun einer mechanischen Zerkleinerung (Stufe 4) zugeführt. Zur Anmischung auf einen bestimmten Massenanteil wird mit einem Teilstrom (Stoffstrom 25 b) einer Auswaschung (Stufe 7) angemischt. Das zerkleinerte Protein wird anschließend enzymatisch behandelt (Stufe 5). Zur Trennung von löslichen Protein- und Nicht-Proteinkomponenten wird mittels Säure (Stoffstrom 22) das Protein aus dem Gemisch (Stoffstrom 23) durch einen Fällschritt (Stufe 6) gefällt. Das proteinhaltige Gemisch (Stoffstrom 24) wird einer weiteren Auswaschung (Stufe 7) zugeführt. Auf diese Weise werden nicht proteinhaltige Komponenten (Stoffstrom 25) über die erste Auswaschung (Stufe 3) der Destillationskolonne (Stufe 2) zugeführt. Ausschließlich in der Auswaschung (Stufe 7) wird Frischwasser (Stoffstrom 27) verwendet. Ein Teilstrom des ausgewaschenen, proteinhaltigen Gemisches (Stoffstrom 26) wird erneut der mechanischen Zerkleinerung (Stufe 4) zugeführt. Das so erhaltene gewaschene proteinhaltige Gemisch wird anschließend sprühgetrocknet (Stufe 8). Es resultiert ein lagerfähiges, getrocknetes Endprodukt (Stoffstrom 29).

## Patentansprüche

1. Verfahren zur Erzeugung eines lebensmittelfähigen, weitgehend wasserlöslichen Proteins aus pflanzlichen Proteinen durch saure alkoholische Extraktion zur teilweisen Entfernung von nicht proteinhaltigen Komponenten und anschließender mechanischen Zerkleinerung der Proteinpartikel, **gekennzeichnet durch** folgende Verfahrensschritte:
a) die saure alkoholische Extraktion des pflanzlichen Proteins wird mit einer alkoholischen Lösung mit einer Konzentration von < 50 Gew% Ethanol unter Zusatz einer organischen Säure, vorzugsweise Essigsäure durchgeführt;
b) die mechanische Zerkleinerung der Proteinpartikel erfolgt in wässriger Suspension bei Trockensubstanzgehalten von > 15 % und einer Temperatur zwischen 30° C und 55° C bis zu einer mittleren Größenpartikelverteilung von 1 - 14 µm;
c) im Anschluß an die saure alkoholische Extraktion und nach einer Neutralisation des proteinhaltigen Gemisches mit Alkali wird die mechanische Zerkleinerung bei pH-Werten im Bereich 6,5 bis 7,5 in Anwesenheit von Alkohol durchgeführt;
d) es erfolgt dann eine weitere Verringerung der Partikelgrößenverteilung durch Zugabe von Endo- und/oder Exopeptidasen;
e) durch Begrenzung der Einwirkzeit der Endo- und/oder Exopeptidasen in einer Konzentration von bis zu 10 ml Enzymlösung pro kg Proteintrockensubstanz auf weniger als 1 Stunde wird die Bildung hydrophober Peptide mit niedriger molarer Masse, vorzugsweise < 8.000 g/mol unterbunden;
f) es wird eine enzymatische Proteolyse bei pH-Werten < 9,5 durchgeführt;
g) das gelöste Protein wird durch Fällung am isoelektrischen Punkt isoliert.

2. Verfahren nach Anspruch 1, **dadurch gekennzeichnet**, daß die saure alkoholische Extraktion im Gegenstromverfahren durchgeführt wird, wobei die Trennung der Extrakt- und Raffinatphase im Zentrifugalfeld vorgenommen wird.

3. Verfahren nach Anspruch 2, **dadurch gekennzeichnet,** daß im Anschluß an die saure alkoholische Extraktion der Alkoholgehalt in der Raffinatphase durch mehrstufige Gegenstromauswaschung erniedrigt wird, wobei die Trennung in Waschwasserphase und proteinhaltiges Konzentrat im Zentrifugalfeld vorgenommen wird.

4. Verfahren nach einem der Ansprüche 1 bis 3, **dadurch gekennzeichnet**, daß die mechanische Zerkleinerung des proteinhaltigen Gemisches bei Feststoffkonzentrationen von 15 bis 25 % mittels Kolloidmühlen, Mikrokavitationsaufschlußmaschinen, Ultraschall oder Hochdruck erfolgt.

5. Verfahren nach einem der Ansprüche 1 bis 4, **dadurch gekennzeichnet**, daß nach Fällung der nach der Enzymbehandlung in Lösung befindlichen Proteine eine weitere Gegenstromauswaschung zur Abtrennung von nicht proteinhaltigen Substanzen und Alkohol durchgeführt wird.

6. Verfahren nach einem der Ansprüche 1 bis 5, **dadurch gekennzeichnet**, daß das gefällte proteinhaltige Material nach vorgenommener Anhebung des pH-Wertes auf 6,5 bis 7,5 in einem Sprühtrockner getrocknet wird.

7. Verfahren nach einem der Ansprüche 1 bis 6, **dadurch gekennzeichnet**, daß während der mechanischen Zerkleinerung des proteinhaltigen Materials in Anwesenheit von Alkohol nicht proteinhaltige Komponenten in Lösung gehen und gemeinsam mit der Extraktphase der sauren alkoholischen Extraktion abgetrennt werden.

8. Verfahren nach einem der Ansprüche 3 bis 7, **dadurch gekennzeichnet**, daß die Trennung des proteinhaltigen Gemisches in Waschwasserphase und proteinhaltiges Konzentrat nach der enzymatischen Behandlung während der anschliessenden Gegenstromauswaschung mit nacheinander geschalteten Dekantern und Separatoren erfolgt, wobei die Waschwasserphase der Dekanter anschließend jeweils in einem Separator nachbehandelt wird, wobei Proteinpartikel < 8 µm in der Phase des proteinhaltigen Materials des Separators zurückgehalten werden.

9. Verfahren nach Anspruch 8, **dadurch gekennzeichnet**, daß die Phase des proteinhaltigen Materials des Dekanters in der letzten Stufe der mehrstufigen Gegenstromauswaschung ganz oder teilweise zu der mechanischen Zerkleinerungsstufe zurückgeführt wird.

10. Verfahren nach einem der Ansprüche 1 bis 9, **gekennzeichnet durch** eine Aufbereitung der Extraktphase der ersten Extraktionsstufe der sauren alkoholischen Extraktion in einer Destillationskolonne derart, daß der enthaltene Alkohol abgetrennt, von den Bestandteilen gereinigt, als Kopfprodukt der Kolonne zurückgewonnen und anschließend wieder zur Extraktion eingesetzt wird, während die in der Extraktphase enthaltenen schwerflüchtigen Komponenten und Feststoffe als Sumpfprodukt erhalten werden.

11. Verfahren nach Anspruch 10, **dadurch gekennzeichnet**, daß das Sumpfprodukt der Destillationskolonne in einer Eindampfanlage aufkonzentriert wird.
